# NEUE EUROPÄISCHE PATENTSCHRIFT

(11) **EP 1 302 297 B2**
(45) Veröffentlichungstag und Bekanntmachung des Hinweises auf die Entscheidung über den Einspruch: **01.08.2012**
(45) Hinweis auf die Patenterteilung: 21.02.2007
(21) Anmeldenummer: 02020982.1
(22) Anmeldetag: 20.09.2002
(51) Int. Cl.: B29C 45/42, B29C 37/00

(54) **Vorrichtung zum Greifen und Ablegen von Gegenständen**
Apparatus for gripping and depositing articles
Dispositif pour saisir et déposer des articles

(30) Priorität: 12.10.2001 DE 10150593
(43) Veröffentlichungstag der Anmeldung: 16.04.2003
(73) Patentinhaber: GeKu Automatisierungssysteme GmbH, 31603 Diepenau (DE)
(72) Erfinder: Gosewehr, Werner, 31606 Warmsen (DE)
(74) Vertreter: Engelhardt, Volker

(56) Entgegenhaltungen:
- EP-A- 0 359 013
- EP-A- 1 008 433
- CH-A5- 687 370
- DE-A1- 10 110 195
- DE-A1- 19 603 234
- DE-U- 9 302 372
- JP-A- 4 033 822
- PATENT ABSTRACTS OF JAPAN vol. 16, no. 208 (M-1249), 18. Mai 1992 (1992-05-18) -& JP 04 033821 A (TAKAGI IND CO LTD), 5. Februar 1992 (1992-02-05)

## Beschreibung

Die vorliegende Erfindung betrifft eine Vorrichtung zum Greifen und Ablegen von Gegenständen, insbesondere von in einer Presse hergestellten Formlingen, mit einem Greiferkopf, der am unteren Ende eines vertikalen Balkens angeordnet ist und vertikal verfahrbar an einem Führungsschlitten gelagert ist, wobei der Führungsschlitten entlang einem ersten horizontalen Balken verfahrbar ist, und ein zweiter horizontaler Balken vorgesehen ist, an dem der erste horizontale Balken verfahrbar gelagert ist.

Es sind Entnahmeroboter für Spritzgussmaschinen und Pressen bekannt, bei denen ein Greiferkopf vertikal verfahrbar ist, um nach dem Press- oder Spritzgussvorgang einen hergestellten Formling zu entnehmen und an einer weiteren Bearbeitungsstation oder Ablagestation abzusetzen. Hierfür ist der vertikale Balken an einem Führungsschlitten gelagert, der entlang eines horizontalen Balkens verfahrbar ist. Am Führungsschlitten kann der vertikale Balken einseitig zu dem horizontalen Balken um einen kurzen Verfahrweg bewegt werden. Bei diesen vorbekannten Entnahmerobotern besteht das Problem, dass der Handhabungsbereich vergleichsweise klein ist und gerade bei größeren Formlingen schnell Platzprobleme entstehen. Ferner ist nachteilig, dass gerade bei beengten Platzverhältnissen der vorhandene Platz um die Maschine herum nur schlecht ausgenutzt wird. Schließlich besteht noch der Nachteil, dass aufgrund der mangelnden Flexibilität des Entnahmeroboters lange Verfahrwege in Kauf genommen werden müssen.

Um den Handhabungsbereich eines Entnahmeroboters zu vergrößern, sind ferner Portallösungen bekannt (JP-A-0433821), bei den ein Greiferkopf an einem vertikal bewegbaren Balken an einem ersten horizontalen Balken gelagert ist, der beidseitig an zwei weiteren sich quer zu dem horizontalen Balken erstreckenden Balken gelagert ist. Diese beidseitige Lagerung ist in der Konstruktion relativ aufwendig und teuer. Ferner muss das Portal außerhalb der Maschine abgestützt werden, so dass ein erheblicher Platzbedarf besteht.

Es ist daher Aufgabe der vorliegenden Erfindung, eine Vorrichtung zum Greifen und Ablegen von Gegenständen der eingangs genannten Art zu schaffen, die bei einfachem Aufbau einen großen Handhabungsbereich besitzt.

Diese Aufgabe wird mit einer Vorrichtung zum Greifen und Ablegen von Gegenständen mit den Merkmalen des Anspruches 1 gelöst.

Erfindungsgemäß ist bei der Vorrichtung der erste horizontale Balken gegenüber dem einzelnen zweiten horizontalen Balken derart erhöht angeordnet, dass der vertikale Balken mit dem Greiferkopf über den zweiten horizontalen Balken bewegbar ist. Dadurch wird der Bewegungsbereich erweitert, da die Bewegung des vertikalen Balkens nicht durch den unteren zweiten horizontalen Balken einseitig begrenzt wird. Dabei kann der vertikale Balken zusammen mit einem abzulegenden Formling über den unteren horizontalen Balken bewegt werden, um dann den Formling auf der gegenüberliegenden Seite des unteren Balkens an der gewünschten Position abzulegen oder einer weiteren Bearbeitungsstation zuzuführen. Ferner können mit dieser Konstruktion kurze Verfahrwege zwischen einem Entnahmebereich und einem anschließenden Bearbeitungsbereich bzw. einem Ablagebereich realisiert werden.

Gemäß einer bevorzugten Ausführungsform ist der erste horizontale Balken über mehrere Streben an dem zweiten horizontalen Balken abgestützt. Die beiden horizontalen Balken bilden somit eine stabile Einheit, so dass auch Bauteile mit größerem Gewicht bewegt werden können.

Um einen möglichst großen Handhabungsbereich mit der Vorrichtung zu besitzen, ist der zweite untere Balken vorzugsweise parallel zu einer Längsrichtung der Vorrichtung angeordnet. Pressen und Spritzgussmaschinen besitzen meist in der Draufsicht einen rechteckförmigen Aufbau, in dessen Mittelabschnitt ein Entnahmebereich für hergestellte Formlinge vorgesehen ist. Wenn der untere Balken entlang einer Längsseite der Maschine verläuft, kann direkt benachbart an dieser Längsseite ein Ablagebereich für die hergestellten Formlinge bereitgestellt werden. Bei geringem Fahrweg kann somit der gesamte Bereich entlang des längs angeordneten Balkens zum Ablegen der Formlinge genutzt werden.

Der Greiferkopf ist vorzugsweise von einem Entahmebereich zu einem Ablagebereich außerhalb einer Formlinge herstellenden Maschine verfahrbar. Dieser Ablagebereich kann in mehrere Abschnitte unterteilt sein, die teilweise mit Schutzgittern überdeckt sein können. Die Schutzgitter verhindern, dass Formlinge an nicht dafür vorgesehenen Positionen abgesetzt werden. Ferner werden Unfälle beim Ablegen der Formlinge vermieden, wobei der Bereich unterhalb der Schutzgitter für das Personal begehbar ausgebildet sein kann. Die Schutzgitter sind daher vorzugsweise in einer Höhe von mindestens 2,0 m, vorzugsweise 2,5 m angeordnet. Um ein versehentliches Ablegen von Formlingen auf den Schutzgittern zu vermeiden, können am Greiferkopf Erkennungsmittel vorgesehen sein, die ein Verfahren des vertikalen Balkens nach unten nur zulassen, wenn kein Schutzgitter unterhalb des Greiferkopfes angeordnet ist. Hierfür können an sich bekannte optische Erkennungsmittel und eine entsprechende Steuerung eingesetzt werden.

Gemäß einer weiteren Ausführungsform sind die Balken als Hohlprofile ausgebildet, an denen jeweils Führungsschlitten schienenartig geführt sind. Die Balken können beispielsweise als Vierkant-Stahlrohre, Profilrohre oder auch als Stangen, Teleskoprohre oder als sonstige Profile ausgebildet sein. Die Führungsschlitten und bewegbaren Lagerungen können als Gleit- oder Rollenlager, als Pneumatik- oder Hydraulikführung oder als sonstige Lagerungen ausgebildet sein.

Vorzugsweise ist die Vorrichtung als ein Entnahmeroboter für eine Spritzgussmaschine ausgebildet.

Die Erfindung wird nachfolgend anhand eines Ausführungsbeispiels mit Bezug auf die beigefügten Zeichnungen näher erläutert. Es zeigen:
- Fig. 1: eine Vorderansicht eines Ausführungsbeispiels einer erfindungsgemäßen Vorrichtung;

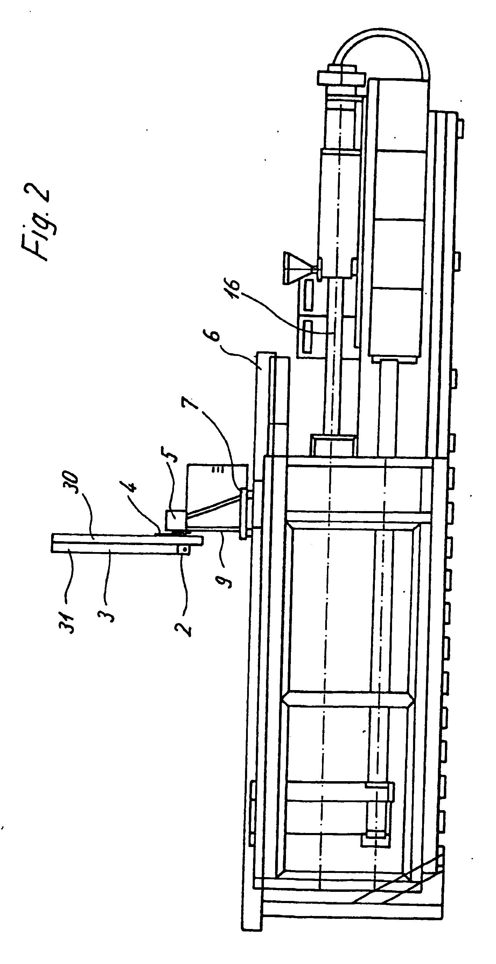

- Fig. 2: eine Seitenansicht der Vorrichtung der Fig. 1, und
- Fig. 3: eine Draufsicht der Vorrichtung der Fig. 1.

Eine Vorrichtung 1 zum Greifen und Ablegen von Gegenständen umfasst einen vertikalen Balken 3, an dessen unteren Ende ein Greiferkopf 2 vorgesehen ist. Der Greiferkopf 2 besitzt geeignete Einrichtungen zum Schwenken, Drehen, Greifen, Ansaugen etc. von Gegenständen, beispielsweise von hergestellten Formlingen. Der vertikale Balken 3 besteht aus zwei Vierkant-Stahlrohren 30 und 31, die relativ zueinander verfahrbar sind.

Der Balken 3 ist über einen Schlitten 4 an einem ersten horizontalen Balken 5 verfahrbar gelagert. Der erste horizontale Balken 5 ist mit einem Ende über einem Entnahmebereich 15 einer Spritzgussmaschine angeordnet und steht mit dem gegenüberliegenden Ende aus dem Bereich der Maschine heraus. Der erste horizontale Balken 5 ist etwa mittig auf einem zweiten horizontalen Balken 6 gelagert, der sich in Längsrichtung der Maschine erstreckt. Zur Lagerung des ersten horizontalen Balkens 5 ist ein bewegbarer Führungsschlitten 7 vorgesehen, an dem schräg verlaufende Führungsstreben 8 und vertikal verlaufende Führungsstreben 9 vorgesehen sind, so dass erste horizontale Balken 5 sicher an dem zweiten horizontalen Balken 6 abgestützt ist. Die Balken 5 und 6 können aus Vierkantstahlrohren oder anderen geeigneten Profilen bestehen. Der zweite horizontale Balken 6 ist über Stützen 20 mit Fußelementen 21 am Boden abgestützt.

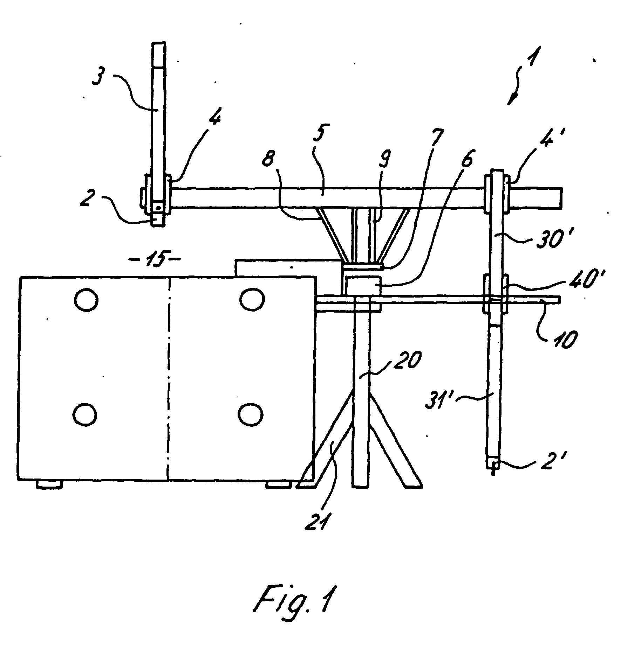

Wie in Fig. 1 erkennbar ist, kann der vertikale Balken 3 von einem Entnahmebereich 15 über den zweiten horizontalen Balken 6 nach außen bewegt werden in eine Position außerhalb der Maschine, die mit einem Strich gekennzeichnet ist. Zum Ablegen von Gegenständen ist der vertikale Balken 3' mit den Balken 30' und 31' nach unten verfahren, wobei der untere Balken 31' über eine Teleskopeinrichtung 40' gehalten ist. Der Balken 3' ist an dem Führungsschlitten 4' an dem oberen horizontalen Balken gehalten.

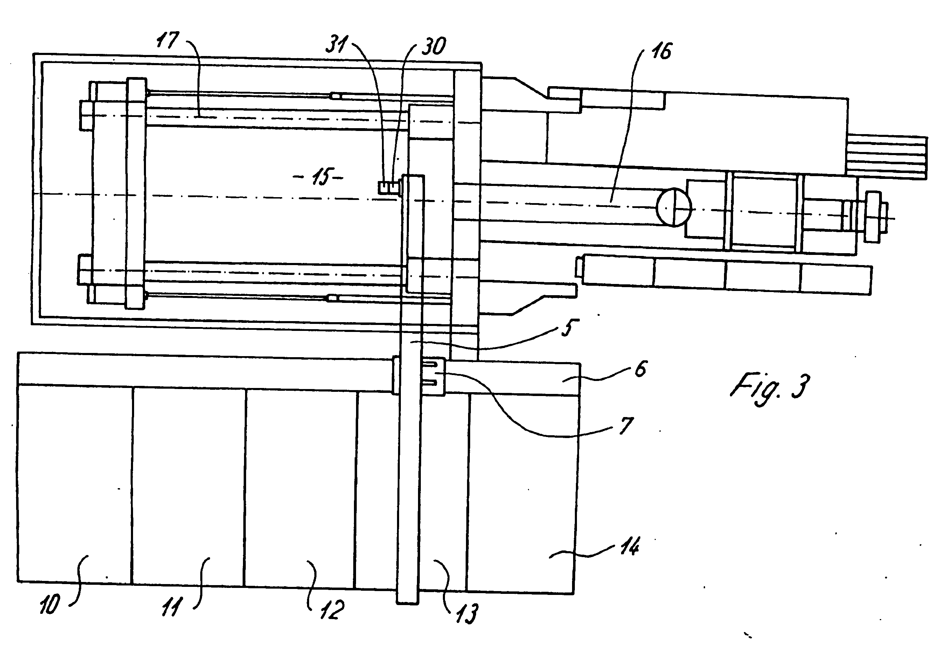

Wie aus Fig. 3 zu erkennen ist, ist außerhalb der Maschine ein Ablagebereich aus mehreren Abschnitten 10, 11, 12, 13, 14 gebildet, die teilweise mit Schutzgittern 10 überdeckt sind. Die Schutzgitter 10 sind in einer Höhe von etwa 2 m angeordnet, so dass der Bereich unterhalb der Schutzgitter begehbar ausgebildet ist und durch die Schutzgitter abgesichert wird. Wenn Formlinge von dem Entnahmebereich 15 abgelegt werden sollen, wird ein Schutzgitter 10 entfernt und beispielsweise im Abschnitt 12 eine Palette angeordnet, um dann die Formlinge in dieser Palette abzulegen. Sofern ein Schutzgitter 10 in diesem Abschnitt vorgesehen ist, können an dem Greiferkopf zwei oder an einer anderen Stelle Erkennungsmittel vorgesehen sein, die verhindern, dass der Gegenstand dann in diesem Abschnitt abgelegt werden kann.

Die Maschine ist vorzugsweise als Spritzgussmaschine oder als Presse ausgebildet, die einen Bereich 16 für die Materialzuführung aufweist und in Draufsicht länglich ausgebildet ist. Die erfindungsgemäße Vorrichtung ist dann an der Maschine oder benachbart montiert. Um kurze Verfahrwege zu besitzen, ist daher der untere zweite Balken 6 in Längsrichtung der Maschine angeordnet, so dass die Verfahrwege für den vertikalen Balken 3 kurz gehalten werden. Der Entnahmebereich 15 ist von Zylindern 17 der Presse begrenzt.

## Patentansprüche

1. Vorrichtung zum Greifen und Ablegen von Gegenständen, insbesondere von in einer Presse hergestellten Formlingen, mit einem Greiferkopf (2), der am unteren Ende eines vertikalen Balkens (3) angeordnet ist und vertikal verfahrbar an einem Führungsschlitten (4) gelagert ist, wobei der Führungsschlitten (4) entlang einem ersten horizontalen Balken (5) verfahrbar ist, und ein einzelner zweiter horizontaler Balken (6) vorgesehen ist, an dem der erste horizontale Balken (5) verfahrbar gelagert ist, wobei der erste horizontale Balken (5) gegenüber dem zweiten horizontalen Balken (6) derart erhöht angeordnet ist, dass der vertikale Balken (3) mit dem Greiferkopf (2) über den zweiten horizontalen Balken (6) bewegbar ist, wobei der zweite horizontale Balken (6) sich in Längsrichtung einer Maschine über einen Entnahmebereich (15) hinaus erstreckt und die Formlinge an der zum Entnahmebereich (15) gegenüberliegenden Seite des zweiten horizontalen Balkens (6) an der gewünschten Position abgelegt oder einer weiteren Bearbeitungsstation zugeführt werden.

2. Vorrichtung nach Anspruch 1, **dadurch gekennzeichnet, dass** der erste horizontale Balken (5) über mehrere Streben (8, 9) an dem zweiten horizontalen Balken (6) abgestützt ist.

3. Vorrichtung nach Anspruch 1 oder 2, **dadurch gekennzeichnet, dass** der zweite untere Balken (6) parallel zu einer Längsrichtung der Vorrichtung (1) in der Draufsicht verläuft.

4. Vorrichtung nach einem der Ansprüche 1 bis 3, **dadurch gekennzeichnet, dass** der Greiferkopf (2) von einem Entnahmebereich (15) zu einem Ablagebereich (10 bis 14) außerhalb einer Formlinge herstellenden Maschine (16) verfahrbar ist.

5. Vorrichtung nach einem der Ansprüche 1 bis 4, **dadurch gekennzeichnet, dass** ein Ablagebereich (10 bis 14) für den Greiferkopf (2) in mehrere Abschnitte (10 bis 14) unterteilt ist, die zumindest teilweise mit Schutzgittern (10) überdeckt sind.

6. Vorrichtung nach Anspruch 5, **dadurch gekennzeichnet, dass** die Schutzgitter (10) in einer Höhe von mindestens 1,5 m, vorzugsweise 2 m, angeordnet sind.

7. Vorrichtung nach einem der Ansprüche 1 bis 6, **dadurch gekennzeichnet, dass** in dem Ablagebereich (10 bis 14) mindestens eine Palette zum Ablegen der Formlinge angeordnet ist.

8. Vorrichtung nach einem der Ansprüche 1 bis 7, **dadurch gekennzeichnet, dass** im Greiferkopf (2) Erkennungsmittel vorgesehen sind, die ein Verfahren des vertikalen Balkens (3) nach unten nur zulassen, wenn kein Schutzgitter (10) unterhalb des Greiferkopfes (2) angeordnet ist.

9. Vorrichtung nach einem der Ansprüche 1 bis 8, **dadurch gekennzeichnet, dass** die Balken (3, 5, 6) als Hohlprofile ausgebildet sind, an denen jeweils ein Führungsschlitten schienenartig geführt ist.

10. Vorrichtung nach einem der Ansprüche 1 bis 9, **dadurch gekennzeichnet, dass** die Vorrichtung (1) ein Entnahmeroboter für eine Spritzgussmaschine ist.

11. Vorrichtung nach einem der Ansprüche 1 bis 10, **dadurch gekennzeichnet, dass** der erste horizontale Balken (5) etwa mittig auf dem zweiten horizontalen Balken (6) abgestützt ist.

## Claims

1. Apparatus for gripping and depositing articles, in particular mouldings produced in a press, having a gripper head (2) which is arranged at the lower end of a vertical beam (3) and is mounted in a vertically displaceable manner on a guide carriage (4), the guide carriage (4) being displaceable along a first horizontal (5), and there being provided a second horizontal beam (6), on which the first horizontal beam (5) is mounted in a displaceable manner,
**whereby**
the first horizontal beam (5) is arranged at a higher level than the second horizontal beam (6) such that the vertical beam (3) with the gripper head (2) can be moved over the second horizontal beam (6), it being the case that the second horizontal beam (6) extends beyond a removal region (15), as seen in the longitudinal direction of a machine, and the mouldings are deposited at the desired position on that side of the second horizontal beam (6) which is located opposite the removal region (15), or are fed to a further processing station.

2. Apparatus according to Claim 1,
**characterized in that**
the first horizontal beam (5) is supported on the second horizontal beam (6) via a plurality of struts (8, 9).

3. Apparatus according to Claim 1 or 2,
**characterized in that**
the second, lower beam (6) runs parallel to a longitudinal direction of the apparatus (1), as seen in plan view.

4. Apparatus according to one of Claims 1 to 3,
**characterized in that**
the gripper head (2) can be displaced from a removal region (15) to a depositing region (10 to 14) outside a moulding-producing machine (16).

5. Apparatus according to one of Claims 1 to 4,
**characterized in that**
a depositing region (10 to 14) for the gripper head (2) is subdivided into a plurality of sections (10 to 14) which are covered over, at least in part, by protective gratings (10).

6. Apparatus according to Claim 5,
**characterized in that**
the protective gratings (10) are arranged at a height of at least 1,5 m, preferably 2 m.

7. Apparatus according to one of Claims 1 to 6,
**characterized in that**
at least one pallet on which the mouldings can be deposited is arranged in the depositing region (10 to 14).

8. Apparatus according to one of Claims 1 of 7,
**characterized in that**
the gripper head (2) contains detecting means which allow displacement of the vertical beam (3) in the downward direction only when there is no protective grating(10) arranged beneath the gripper head (2).

9. Apparatus according to one of Claims 1 to 8,
**characterized in that**
the beams (3, 5, 6) are designed as hollow profiles on which a respective guide carriage is guided in a rail-like manner.

10. Apparatus according to one of Claims 1 to 9,
**characterized in that**
the apparatus (1) is a removal robot for an injection-moulding machine.

11. Apparatus according to one of Claims 1 to 10,
**characterized in that**
the first horizontal beam (5) is supported approximately centrally on the second horizontal beam (6).

## Revendications

1. Dispositif destiné à déposer des objets, en particulier des ébauches réalisées dans une presse, comportant une tête de préhension (2), située sur l'extrémité inférieure d'une barre verticale (3) et montée mobile verticalement sur un chariot de guidage (4), le chariot de guidage (4) étant mobile le long d'une première barre horizontale (5), et il est prévu une deuxième barre horizontale (6), sur laquelle la première barre horizontale (5) est montée mobile,
**cependant**
la première barre horizontale (5) est agencée plus haut que la deuxième barre horizontale (6), de telle sorte que la barre vertical (3), munie de la tête de préhension (2), peul se dé placer au-dessus de la deuxième barre horizontale (6), la deuxième barre horizontale (6) s'étendant dans la direction longitudinale d'une machine au-delà d'une zone de prélèvement (15) et les ébauches étant déposées à l'emplacement souhaité sur la deuxième barre horizontale (6), à savoir sur son côté oppose à la zone prélèvement (15), ou étant acheminées vers un post de traitement ultérieur.

2. Dispositif selon la revendication 1,
**caractérisé en ce que**
la première barre horizontale (5) est mise en appui sur la deuxième barre horizontale (6) par l'Intermédiaire de plusieurs entretoises (8, 9).

3. Dispositif selon la revendication 1 ou 2,
**caractérisé en ce que**
la deuxième barre horizontale (6), sur la vue en élévation, est orientée parallèlement à une direction longitudinale du dispositif (1).

4. Dispositif selon l'une quelconque des revendications 1 à 3,
**caractérisé en ce que**
la tête de préhension (2) est apte à être déplacée depuis une zone de prélèvement (15) vers une zone de dépose (10 à 14) en dehors d'une machine (16) réalisant les ébauches.

5. Dispositif selon l'une quelconque des revendications 1 à 4,
**caractérisé en ce qu'**
une zone de dépose (10 à 14) pour la tête de préhension (2) est divisée en plusieurs parties (10 à 14) qui sont couvertes au moins en partie par des grilles protection (10).

6. Dispositif selon la revendication 5,
**caractérisé en ce que**
les grilles des protection (10), sont montées à une hauteur des 1,5 m au moins de préférence 2 m.

7. Dispositif selon l'une quelconque des revendications 1 à 6,
**caractérisé en ce que**
dans la zone de dépose (10 à 14) est disposée au moins une palette pour y déposer les ébauches.

8. Dispositif selon l'une quelconque des revendications 1 à 7,
**caractérisé en ce que**
dans la tête de préhension (2) sont prévus des moyens de détection qui autorisent un déplacement vers le bas de la barre verticale (3) uniquement lorsque aucune grille de protection (10) n'est située en dessous de la tête de préhension (2).

9. Dispositif selon l'une quelconque des revendications 1 à 8,
**caractérisé en ce que**
les barres (3, 5, 6) sont réalisée sous forme de profiles creux, sur chacun desquels est guidé respectivement un chariot de guidage à la manière d'un guidage à rails.

10. Dispositif selon l'une quelconque des revendications 1 à 9,
**caractérisé en ce que**
le dispositif (1) est un robot de prélèvement pour une machine de moulage par injection.

11. Dispositif selon l'une quelconque des revendications 1 à 10,
**caractérisé en ce que**
la première barre horizontale (5) prend appui à peu prés au milieu sur la deuxième barre horizontale (6).
